(19) Europäisches Patentamt

European Patent Office

Office européen des brevets

(11) **EP 1 243 899 A1**

(12) **EUROPÄISCHE PATENTANMELDUNG**

(43) Veröffentlichungstag:
**25.09.2002 Patentblatt 2002/39**

(51) Int Cl.$^7$: **G01D 5/244**, G01D 5/245, G01D 5/16

(21) Anmeldenummer: **02100281.1**

(22) Anmeldetag: **21.03.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.03.2001 DE 10113871**

(71) Anmelder:
• **Philips Corporate Intellectual Property GmbH**
  **52064 Aachen (DE)**
  Benannte Vertragsstaaten:
  **DE**
• **Koninklijke Philips Electronics N.V.**
  **5621 BA Eindhoven (NL)**
  Benannte Vertragsstaaten:
  **AT BE CH LI CY DK ES FI FR GB GR IE IT LU MC NL PT SE TR**

(72) Erfinder:
• **Hinz, Michael**
  **52066, Aachen (DE)**
• **Pusch, Stefan**
  **52066, Aachen (DE)**
• **Muth, Michael**
  **52066, Aachen (DE)**

(74) Vertreter: **Volmer, Georg, Dipl.-Ing. et al**
**Philips Corporate Intellectual Property GmbH,**
**Habsburgerallee 11**
**52064 Aachen (DE)**

(54) **Anordnung zur Positions-, Winkel- oder Drehzahlbestimmung**

(57) Anordnung zur Bestimmung einer Position, eines Winkels und/oder einer Drehzahl mittels eines Sensors (1), welcher wenigstens eine Sensor-Vollbrücke mit zwei Halbbrücken (3,4) aufweist, und mittels eines Encoders (2; 11) mit lateral abwechselnden Magnetpolen, wobei bei einer Relativ-Bewegung zwischen Sensor (1) und Encoder (2; 11) ein sinusförmiges Magnetfeld den Sensor (1) durchströmt, so daß diebeiden Halbbrücken (3, 4) des Sensors (1) je ein sinusförmiges Sensorsignal (V1, V2) liefern, und wobei aus diesen Signalen mittels Summen bzw. Differenzbildung ein Summensignal (SUM) und ein Differenzsignal (DIFF) gewonnen werden, welche zur Bestimmung einer Position, eines Winkels und/oder einer Drehzahl ausgewertet werden.

FIG. 1

EP 1 243 899 A1

**Beschreibung**

Gegenstand der Erfindung ist eine Anordnung zur Bestimmung einer Position, eines Winkels und/oder einer Drehzahl. Dabei ist einerseits ein Sensor vorgesehen und andererseits ein magnetisierter Encoder, der über die Relativ-Bewegungsrichtung zwischen Sensor und Encoder hin lateral abwechselnde Magnetpole aufweist. Bei einer Relativbewegung zwischen Sensor und Encoder wird infolge des Magnetfeldes, das den Sensor in sich verändernder Größe durchströmt, der Sensor ausgangsseitig ein Sensorsignal liefern.

Eine derartige Anordnung ist aus der deutschen Offenlegungsschrift DE 19849613 A1 bekannt. Dort ist als Sensor ein magnetoresistiver Winkelsensor vorgesehen, der relativ zu einem magnetischen Körper mit magnetischen Streifen bewegbar ist. Die Anordnung weist einen magnetisierten Encoder auf, der über seine Länge in variierendem Winkel verlaufende Magnetfeldlinien aufweist. Der Winkel dieser Magnetfeldlinien wird gemessen und daraus die relative Position zwischen Sensor und dem Encoder ermittelt.

Bei dieser Anordnung ist der Sensor als Winkelsensor ausgebildet, da er die Winkel der Magnetfeldlinien ermitteln muß. Der Sensor ist magnetoresistiv und muß daher im Bereich der Magnetfeldsättigung arbeiten, um ausschließlich die Richtung des Magnetfeldes zu ermitteln. Als Sensor sind zwei Sensorvollbrücken vorgesehen. Die Anordnung liefert zwei um 90° phasenverschobene Signale; diesbezüglich besteht jedoch die entscheidende Einschränkung, daß diese Signale zueinander nur dann um 90° verschoben sind, wenn der Abstand der beiden Vollbrücken zueinander einerseits und die Veränderung der Winkel der Magnetfeldlinien über die Länge des magnetischen Streifens andererseits bestimmte geometrische Verhältnisse einhalten. Hierin liegt eine wesentliche Einschränkung der Anwendbarkeit, ebenso wie darin, daß der magnetoresistive Sensor, um ausschließlich als Winkelsensor arbeiten zu können, in der Magnetfeldsättigung arbeiten muß.

Es ist Aufgabe der Erfindung, eine Anordnung der eingangs genannten Art anzugeben, welche universell einsetzbar ist, bei der also festgelegte geometrische Verhältnisse zwischen Sensor und Encoder nicht einzuhalten sind, und die nicht im Bereich der magnetischen Sättigung arbeiten muß.

Diese Aufgabe ist erfindungsgemäß durch folgende Merkmale des Patentanspruchs 1 gelöst:

Anordnung zur Bestimmung einer Position, eines Winkels und/oder einer Drehzahl mittels eines Sensors, welcher wenigstens eine Sensor-Vollbrücke mit zwei Halbbrücken aufweist, und mittels eines Encoders mit lateral abwechselnden Magnetpolen, wobei bei einer Relativ-Bewegung zwischen Sensor und Encoder ein sinusförmiges Magnetfeld den Sensor durchströmt, so daß die beiden Halbbrücken des Sensors je ein sinusförmiges Sensorsignal liefern, und wobei aus diesen Signalen mittels Summen bzw. Differenzbildung ein Summensignal und ein Differenzsignal gewonnen werden, welche zur Bestimmung einer Position, eines Winkels und/oder einer Drehzahl ausgewertet werden.

Bei der erfindungsgemäßen Anordnung weist der Sensor wenigstens eine Sensor-Vollbrücke mit zwei Halbbrücken auf. Im Regelfall genügt dabei eine Sensor-Vollbrücke. Es ist ferner ein Encoder vorgesehen, der über die relative Bewegungsrichtung hin zwischen Sensor und Encoder lateral abwechselnde Magnetpole aufweist. Infolgedessen durchströmt bei einer Relativbewegung zwischen Sensor und Encoder ein sinusförmiges Magnetfeld den Sensor bzw. die beiden Sensorhalb-brücken, die der Sensor aufweist.

Somit liefern die beiden Halbbrücken des Sensors je ein sinusförmiges Signal V 1 bzw. V 2. Aus diesen Signalen wird einerseits ein Summensignal SUM und andererseits ein Differenzsignal DIFF durch Summen bzw. durch Differenzbildung gewonnen. Diese beiden Signale sind in an sich bekannter Weise zur Bestimmung einer Position, eines Winkels oder auch einer Drdizahl einsetzbar.

Die Bildung des Summensignals SUM und des Differenzsignals DIFF hat den großen Vorteil, daß diese beiden Signale zueinander immer eine Phasenverschiebung von 90° aufweisen, so daß eine Auswertung dieser Signale zur Positions- bzw. Winkelbestimmung auf konventionelle Weise möglich ist. Hierin liegt auch der wesentliche Vorteil gegenüber dem Stande der Technik. Bei der Erfindung müssen keine bestimmten festgelegten geometrische Verhältnisse zwischen dem Abstand der beiden Sensor- Halbbrücken zueinander einerseits und dem Abstand der Magnetpole auf dem Encoder zueinander andererseits eingähalten werden.

Da der Sensor ferner nicht als Winkelsensor arbeitet, kann er auch außerhalb seiner Sättigung, also mit kleinerem Magnetfeld, betrieben werden.

Mit Hilfe der erfindungsgemäßen Anordnung können nicht nur relative Positionen, sondern absolute Positionen ermittelt werden. Bei Verwendung eines Magnetpolpaares mit der Polpaarbreite λ (Encoder) kann mittels eines Magnetoresistiven Sensors die momentane absolute Position über dem Encoder detektiert werden. Bei z.B. einer Deaktivierung des Sensorsystems und einer weiteren Aktivierung bleibt die Information über die aktuelle Position erhalten bzw. wird aktualisiert.

Für die Messung einer relativen Position muss der vorherige Zustand bzw. Position gespeichert werden.

Für Encoder mit mehreren Magnetpolpaaren kann weiterhin eine absolute Position ermittelt werden, indem z.B. ein Zähler aktiviert wird, der das Überschreiten von den Übergängen der Magnetpole erfasst und je nach Bewegungsrichtung entsprechend inkrementiert bzw. dekrementiert.

Bei einer Auswertung der Position bzw. des Winkels werden das Summen und das Differenzsignal bzw. deren Werte ausgewertet.

Bei einer Drehzahlbestimmung genügt es hingegen, wie gemäß einer Ausgestaltung der Erfindung nach Anspruch 2 vorgesehen ist, eine Bestimmung der Null-Durchgänge eines der beiden oder beider Signale vorzunehmen.

Durch eine Auswertung der Nulldurchgänge sowohl des Summensignals wie auch des Differenzsignals entstehen doppelt soviele Nulldurchgänge für die Drehzalbestimmung wie bei bekannten Lösungen. Dies macht beispielsweise eine Verkleinerung des Encoders und eine Halbierung der Anzahl der Magnetpole möglich, wobei die Anzahl der Nulldurchgänge pro Umdrehung des Encoders gegenüber bekannten Lösungen gleichbleibt.

Gemäß einer weiteren Ausgestaltung der Erfindung nach Anspruch 3 ist der Encoder als magnetisierte Ebene mit abwechselnden Magnetpolen ausgestaltet. Diese magnetisierte Ebene kann einerseits absolut plan sein, beispielsweise für die Bestimmung einer Position zwischen der Ebene und dem Sensor. Sie kann aber auch kreisförmig gebogen sein und dann beispielsweise zur Positions- oder Drehzahlbestimmung mittels der erfindungsgsmäßen Anordnung eingesetzt werden.

Wie oben beschrieben, ist eine spezielle Abstimmung zwischen dem Abstand der beiden Sensor-Halbbrücken zueinander einerseits und dem Abstand zweier Polpaare auf dem Encoder andererseits nicht erforderlich. Es ist jedoch zweckmäßig, wie gemäß einer weiteren Ausgestaltung der Erfindung nach Anspruch 4 vorgesehen ist, den Abstand (d1) der beiden Sensor-Halbbrücken zueinander kleiner zu wählen als den Abstand zweier Polpaare auf dem Encoder zueinander.

Gegebenenfalls kann der Wunsch bestehen, eine Positionsänderung zwischen dem Sensor und dem Encoder zu erfassen, welche länger ist als der Abstand zweier Polpaare auf dem Encoder zueinander. Dazu ist gemäß einer weiteren Ausgestaltung der Erfindung gemäß Anspruch 5 ein Zähler zum Zählen der Nulldurchgänge des Summsignals SUM und/oder des Differenzsignals DIFF vorgesehen. Damit kann neben der Bestimmung der Position bzw. des Winkels anhand des aktuellen Wertes des Summsignals SUM und des Differenzsignals DIFF mittels Zählen der Nulldurchgänge außerdem die Grobposition ermittelt werden

Wie oben bereits erläutert, sind Verfahren bekannt, um aus Sinus- und Kosinussignalen mittels trigonometrischer Formeln die Relativ-Position zwischen Sensor und Encoder zu ermitteln.

Hierzu kann vorteilhaft eine Arcus-Tangens-Funktion eingesetzt werden, wie gemäß einer weiteren Ausgestaltung der Erfindung nach Anspruch 6 vorgesehen ist.

Die in diesem Anspruch angegebenen Formeln machen unter anderem deutlich, daß die beiden Signale SUM und DIFF zueinander exakt um 90° phasenverschoben sind. Dies bedeutet, daß beispielsweise dann, wenn das DIFF-Signal einen Nulldurchgang hat, im SUM-Signal ein Extremwert auftritt und umgekehrt. Aufgrund dieser Beziehung der beiden Signale zueinander kann eine unmittelbare Auswertung der beiden Signale mittels einer solchen ARCTAN-Funktion erfolgen und somit unmittelbar eine Winkelbestimmung vorgenommen werden. Soll ggf. eine Position bestimmt werden, so wird aus dem Winkel mittels einer linearen Kennlinie eine Position ermittelt.

Nachfolgend wird ein Ausführungsbeispiel der Erfindung anhand der Zeichnung näher erläutert. Es zeigen:

Figur 1    eine erste Form der Ausführungsform der erfindungsgämäßen Anordnung zur Bestimmung einer Position,

Figur 2    eine zweite Ausführungsform der erfindungsgemäßen Anordnung zur Bestimmung einer Drehzahl,

Figur 3    die Ausgangssignale der beiden Sensor-Halbbrücken sowie die Summen- und Differenzsignale der Anordnungen gemäß Figur 1 oder Figur 2 und

Figur 4    eine Darstellung entsprechend Figur 3 mit anderen geometrischen Verhältnissen der Sensor-Halbbrücken bzw. der Breite der Polpaare und somit einem anderen Phasenverhältnis zwischen den Signalen V1 und V2 der Sensor-Halbbrücken.

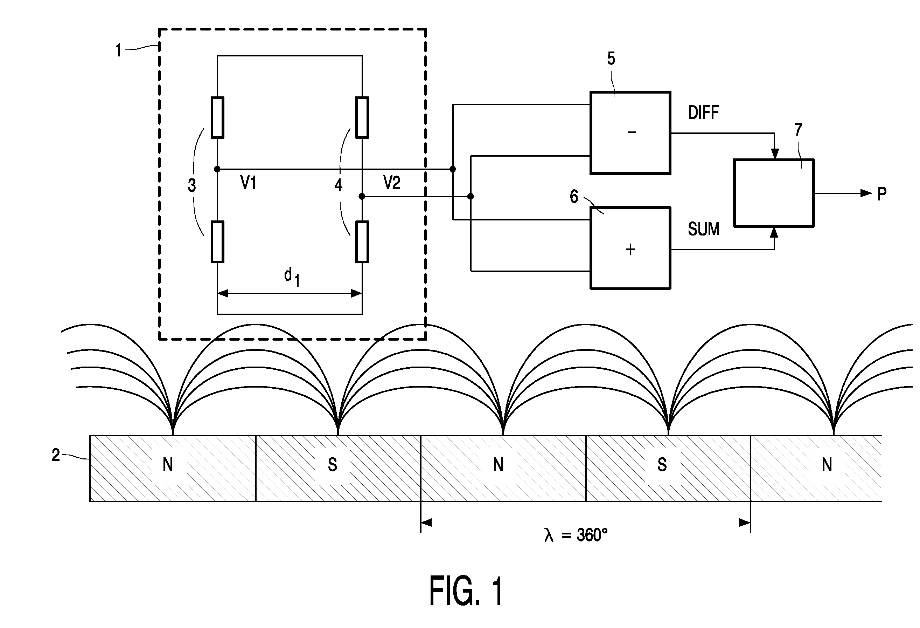

In Figur 1 ist eine schematische Darstellung bzw. ein Blockschaltbild einer erfindungsgemäßen Anordnung in einer ersten Ausführungsform dargestellt, die zur Bestimmung einer Position bzw. mit geringfügiger Änderung eines Winkels geeignet ist.

Mittels der Anordnung soll eine relative Position zwischen einem Sensor 1 und einem Encoder 2 ermittelt werden.

Die Darstellung gemäß Figur 1 zeigt, daß der Encoder 2 in lateraler Richtung wechselnd magnetisiert ist. In dieser Richtung folgen aufeinander abwechselnd Polpaare, welche jeweils die Länge eines Winkels Lambda = 360° haben. Der Wert von Lambda (λ) wird weiter unten zur Berechnung der Position bzw. des Winkels eingesetzt.

Der Sensor 1 und der Encoder 2 sind in Längsrichtung des Encoders 2 relativ zueinander verschiebbar. Infolgedessen werden die in der Figur 1 schematisch eingetragenen Magnetfeldlinien den Sensor 1 durchströmen. Bei einer Bewegung der beschriebenen Art detektieren zwei Sensor-Halbbrücken 3 bzw. 4 des Sensors 1 das Magnetfeld des Encoders 2, so daß bei einer Bewegung zwischen Sensor 1 und Encoder 2 der Sensor 1 sinusförmige. Signale liefert.

Die beiden Sensor-Halbbrücken 3 und 4, welche jeweils zwei Sensor-Elemente aufweisen, liefern infolgedessen sinusförmige Ausgangssignale V1 bzw. V2, die jeweils zwischen den beiden Sensor-Elementen der Sensor-Halbbrücken 3 und 4 abgegriffen werden.

Infolge des oben beschriebenen zeitlichen Verhaltens der Magnetfeldlinien in den beiden Sensor-Halbbrükken 3 und 4 sind auch die Signale V1 und V2 sinusförmig.

Die beiden Sensor-Halbbrücken 3 und 4 weisen zueinander einen Abstand von $d_1$ auf.

Abhängig von dem Wert von $d_1$ und dem Wert von Lambda weisen die beiden Sensor-Signale V1 und V2 zueinander eine bestimmte Phasenverschiebung auf. Zur Auswertung dieser Signale mittels trigonometrischer Funktionen ist es jedoch erforderlich, daß die Sensor-Signale zueinander einen vorgegebenen Winkel, nämlich 90°, ausweisen. Dies wiederum bedeutet, daß entweder die magnetische Rasterung auf dem Encoder 2, also der Wert Lambda, oder der Abstand der beiden Halbbrücken 3 und 4 zueinander, also der Wert $d_1$, bestimmte Werte aufweisen müssen. Dafür bestimmte Anwendungen, beispielsweise für Sensoren in Kraftfahrzeugen für Antiblockier-systeme, eine solche Abstimmung nicht möglich bzw. nicht erwünscht ist, geht die Erfindung einen anderen Weg 3 und wertet die Sensorsignale V1 und V2 nicht unmittelbar aus.

In der erfindungsgemäßen Anordnung sind daher ein Subtrahierer 5 und ein Addierer 6 vorgesehen, denen jeweils beide Sensorsignale V1 und V2 zugeführt werden. Der Subtrahierer 5 bildet aus diesen Signalen ein Differenzsignal DIFF; der Addierer 6 bildet aus Ihnen ein Summsignal SUM.

Diese beiden Signale weisen zueinander einen Phasenversatz von exakt 90° auf und erschließen sich daher der Auswertung mittels trigonometrischer Funktionen. Diese Auswertung wird in einer Auswertestufe 7 vorgenommen, welche ausgangsseitig ein Signal P liefert, welches den Wert der Relativposition zwischen Sensor 1 und Encoder 2 darstellt.

Zur Berechnung eines Wertes für eine bestimmte Position mittels der Auswertestufe 7 kann vorteilhaft eine ARCTAN-Berechnung durchgeführt werden. Hierbei wird aus den Signalen SUM und DIFF eine lineare Kennlinie erzeugt, anhand derer sich der momentane Winkel $\alpha$ unmittelbar ermitteln lässt.

Für eine Positionsbestimmung muß der Wert, der sich aufgrund der ARCTAN-Berechnung ergibt (hier der Winkel $\alpha$), entsprechend in eine Länge umgerechnet werden. Zu beachten ist ebenfalls, daß die Amplituden der Signale SUM und DIFF korrigiert werden müssen.

Die Berechnung des Winkels $\alpha$ kann nach folgenden Gleichungen vorgenommen werden:

Aus den Gleichungen

$$\text{DIFF} := V1 - V2 = 2 \cdot V0 \cdot \cos(\frac{phi}{2}) \cdot \sin(?t) \qquad [1]$$

$$\text{SUM} := V1 + V2 = 2 \cdot V0 \cdot \sin(\frac{phi}{2}) \cdot \sin(?t - 90°) \qquad [2]$$

ergibt sich :

$$\tan(\alpha) = \frac{DIFF}{SUM} = \frac{2 * V0 * \cos(\frac{phi}{2}) * \sin(?t)}{2 * V0 * \sin(\frac{phi}{2}) * \sin(?t - 90°)}$$

$$= \frac{\cos(\frac{phi}{2}) * \sin(?t)}{\sin(\frac{phi}{2}) * -\cos(?t)} = \frac{-\tan(?t)}{\tan(\frac{phi}{2})} \quad mit \quad \tan(\frac{phi}{2}) = \text{const.} = c \qquad [3]$$

$$\alpha = \arctan(\frac{-\tan(?t)}{c}) \quad mit \quad c = \tan(\frac{phi}{2}) \qquad [4]$$

dabei sind

phi: der Phasenversatz zwischen den Signalen V1 und V2,
α: der berechnete Winkel,
V0: die maximale Amplitude der Signale V1 und V2,
V1: das Ausgangssignal der ersten Halbbrücke,
V2: das Ausgangssignal der zweiten Halbbrücke und
ωt: die Kreisgeschwindigkeit der Signale V1 und V2.

Diese Gleichungen zeigen unter anderem, das beispielsweise das Vorzeichen des Differenzsignals DIFF bei einem Vorzeichenwschsel der Phasendifferenz phi unverändert bleibt. Im Gegensatz dazu ändert sich das Vorzeichen des Summsignals SUM. Weiterhin zeigen diese Formeln, daß die Signale SUM und DIFF zueinander exakt um 90° phasenverschoben sind Nur auf diese Weise ist die relativ einfache Auswertung der Signale mittels der o. a. trigonometrischen Funktionen möglich.

Gegebenenfalls kann es wünschenswert sein, daß der relative Verfahrweg zwischen Sensor 1 und Encoder 2 in der Darstellung gemäß Figur 1 größer als Lambda (λ) ist. In diesem Fall ist in der Auswertestufe 7 vorteilhaft ein Zähler vorgesehen, mittels dessen ermittelt werden kann, an welcher Grobposition sich die beiden zueinander befinden. Die Feinposition wird dann anhand der trigonometrischen Funktion ermittelt.

Die Anordnung gemäß Figur 1 kann bei einer entsprechenden geometrischen Ausgestaltung des Sensors 2 beispielsweise als Ring auch in nahezu unveränderter Weise zur Drehzahlbestimmung eingesetzt werden. Es kann in diesem Fall unmittelbar der Winkel Alpha ausgewertet werden und eine Umrechnung des Winkels Alpha mittels einer linearen Kennlinie auf einen linearen Verfahrweg ist dann nicht erforderlich.

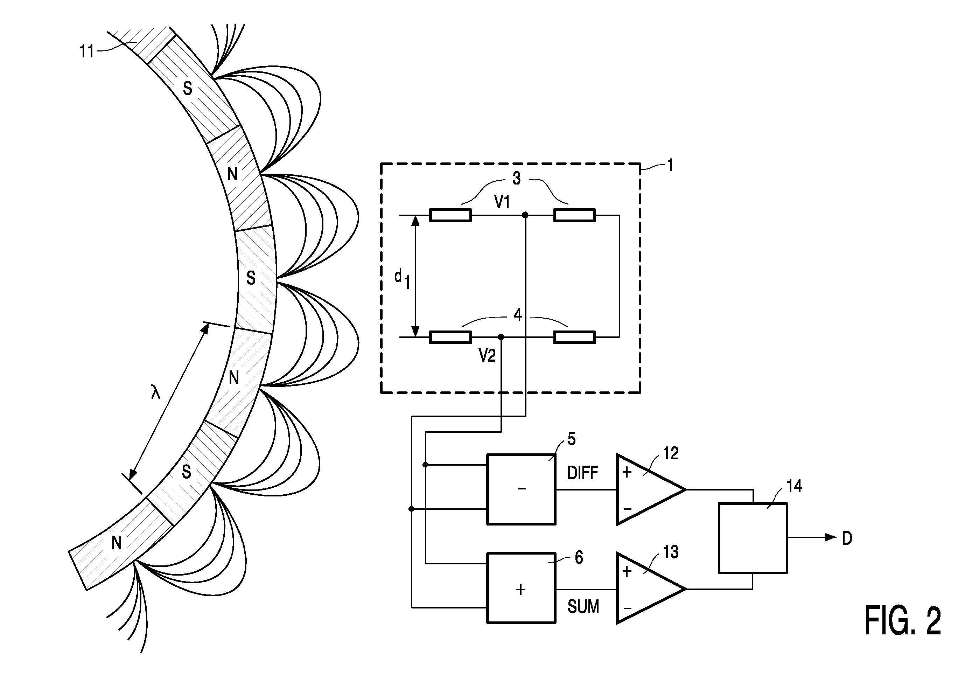

In Figur 2 ist eine zweite Ausführungsform der erfindungsgemäßen Anordnung dargestellt, bei der ein Encoder 11 vorgesehen ist, der im Prinzip dem Encoder 2 gemäß Figur 1 entspricht, der jedoch ringförmig ausgebildet ist.

Die Anordnung gemäß Figur 2 ist geringfügig erweitert, um eine Drehzahlmessung zu gestatten.

Abgesehen von dem Encoder 11 ist die übrige Anordnung weitgehend identisch mit derjenigen gemäß Figur 1; insbesondere ist der Sensor 1 mit seinen beiden Sensor-Halbbrücken 3 und 4 gleich aufgebaut wie in der Anordnung gemäß Figur 1. Auch sind in dieser Anordnung wieder ein Subtrahierer 5 und ein Addierer 6 vorgesehen, die das Summsignal SUM und das Differenzsignal DIFF liefern.

In dem Ausführungsbeispiel gemäß Figur 2 werden diese beiden Signale in der Weise ausgewertet, daß sie zunächst Komparatoren 12 und 13 zugeführt werden, die aus ihnen einfache Rechteck-Signale liefern Diese Rechteck-Signale werden mittels einer Stufe 14 zur Drehzahlermittlung ausgewertet. Aus den Rechteck-Signalen, die die Komparatoren 12 und 13 liefern, ist unmittelbar eine Frequenz ermittelbar, die der Frequenz der Null-Durchgänge des Summsignals SUM und des Differenzsignals DIFF entspricht. Die Stufe 14 zur Drehzahlermittlung zählt diese Null-Durchgänge pro Zeiteinheit und ermittelt daraus unmittelbar eine Drehzahl, deren Wert als Signal D ausgegeben wird.

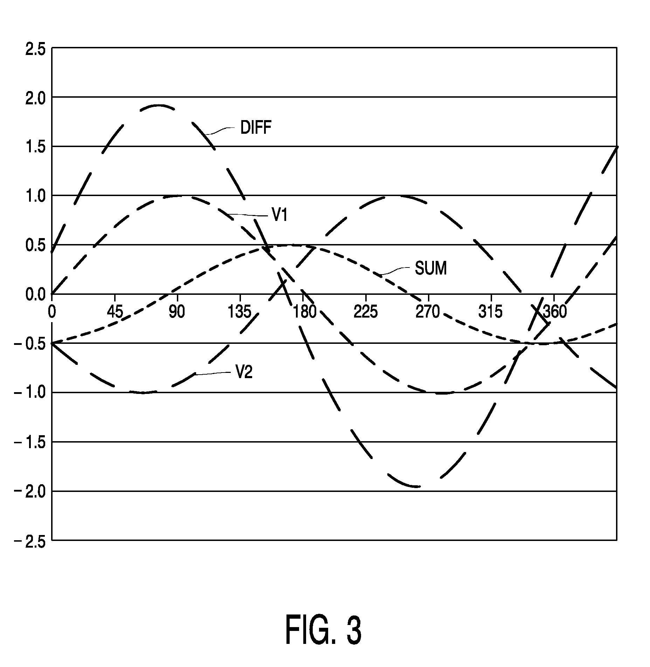

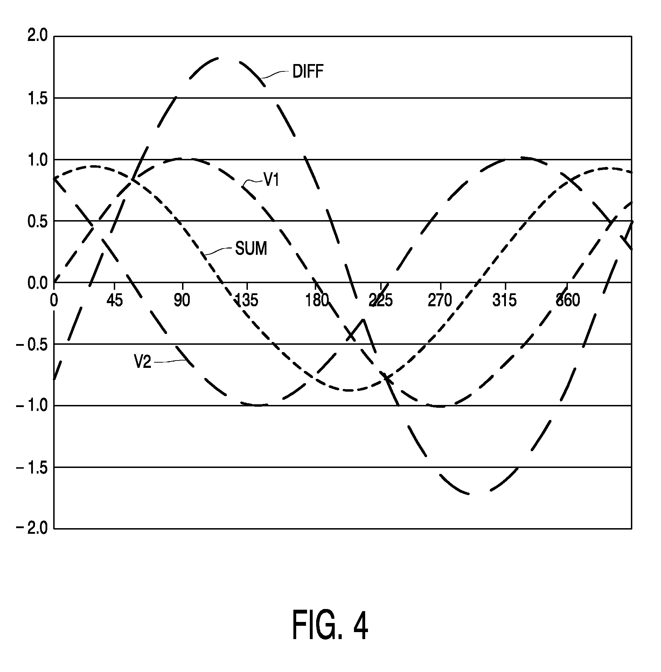

Die Figuren 3 und 4 zeigen Signalverläufe über dem Winkel λ, wie sie beispielsweise in der Anordnung gemäß Figur 1 oder 2 zur Positions- bzw. Winkelbestimmung auftreten können. Dabei entspricht ein wert von λ = 360 Grad einer Relativbewegung zwischen Sensor 1 und Encoder 2 bzw. 11 um die Länge eines Polpaares der Magnetisierung des Encoders 2 bzw. 11.

So zeigt die Figur 3 das Ausgangssignal V1 der ersten Sensor-Halbbrücke 3 der Anordnung gemäß Figur 1 sowie das Ausgangssignal V2 der zweiten Sensor-Halbbrücke 4. Die Darstellung zeigt, daß diese zueinander keine Phasenverschiebung von 90° aufweisen, sondern eine kleinere von etwa 26°. Dies tritt dann auf, wenn der Abstand D1 der beiden Sensor-Halbbrücken 3 und 4 zueinander sowie der Wert Lambda der Magnetisierung des Encoders nicht bestimmte Verhältnisse aufweisen.

Da die erfindungsgemäße Anordnung gerade auf diese Abstimmung verzichten möchte, werden das Summsignal SUM und das Differenzsignal DIFF erzeugt, die in der Figur ebenfalls eingetragen sind. Die Figur zeigt, daß diese beiden Signale zueinander eine Phasenverschiebung von 90° aufweisen und sich somit unmittelbar einer trigonometrischen Auswertung erschließen.

In Figur 4 findet sich eine Darstellung entsprechend Figur 3, jedoch beträgt hier aufgrund anderer geometrischer Verhältnisse der Wert D1 bzw. Lambda, der Phasenversatz zwischen den Signalen V1 und V2 etwa 54°. Auch hier beträgt jedoch der Phasenversatz zwischen dem Summsignal SUM und dem Differenzsignal DIFF wiederum 90°.

Die Darstellungen gemäß der Figuren 3 und 4 zeigen somit, daß eine genaue Abstimmung der Werte D1 und Lambda zueinander nicht erforderlich ist; vielmehr ist eine Auswertung über die Bildung des Summsignals SUM und des Differenzsignals DIFF, die zueinander immer eine Phasenverschiebung von 90° haben, gemäß der erfindungsgemäßen Anordnung dennoch möglich.

Die Figuren 3 und 4 zeigen außerdem, daß bei einer Drehzahlbestimmung mittels der Anordnung nach Figur 2 pro Umdrehung des Encoders 11 bei einer Auswertung der Nulldurchgängs sowohl des Summensignals SUM wie auch des Differenzsignals DIFF doppelt so viele Nulldurchgänge für die Drehzahlbestimmung wie bei bekannten Lösungen auftreten. Dies macht beispielsweise eine Verkleinerung des Encoders 11 und eine Halbierung der Anzahl der Magnetpole möglich, wobei die Anzahl der Nulldurchgängs pro Umdrehung des Encoders verglichen mit bekannten Lösungen gleich bleibt.

**Patentansprüche**

1. Anordnung zur Bestimmung einer Position, eines Winkels und/oder einer Drehzahl mittels eines Sensors (1), welcher wenigstens eine Sensor-Vollbrücke mit zwei Halbbrücken (3, 4) aufweist, und mittels eines Encoders (2; 11) mit lateral abwechselnden Magnetpolen, wobei bei einer Relativ-Bewegung zwischen Sensor (1) und Encoder (2; 11) ein sinusförmiges Magnetfeld den Sensor (1) durchströmt, so daß die beiden Halbbrücken (3, 4) des Sensors (1) je ein sinusförmiges Sensorsignal (V1, V2) liefern, und wobei aus diesen Signalen mittels Summen bzw. Differenzbildung ein Summensignal (SUM) und ein Differenzsignal (DIFF) gswonnen werden, welche zur Bestimmung einer Position, eines Winkels und/oder einer Drehzahl ausgewertet werden.

2. Anordnung nach Anspruch 1,
**dadurch gekennzeichnet,**
**daß** eine Drehzahlbestimmung mittels Mitteln (14) zur Bestimmung der Nulldurchgänge des Summensignals SUM und/oder des Differenzsignals DIFF vorgenommen wird.

3. Anordnung nach Anspruch 1,
**dadurch gekennzeichnet,**
**daß** als Encoder (2; 11) eine magnetisierte Ebene mit abwechselnden Magnetpolen eingesetzt wird.

4. Anordnung nach Anspruch 1,
**dadurch gekennzeichnet,**
**daß** der Abstand ($d_1$) der beiden Sensor-Halbbrücken (3, 4) zueinander kleiner ist als die Länge ($\lambda$) eines Polpaares des Encoders (2; 11).

5. Anordnung nach Anspruch 1,
**dadurch gekennzeichnet,**
**daß** ein Zähler zum Zählen vorzugsweise der Nulldurchgänge des Summensignals SUM und/oder des Differenzsignals DIFF vorgesehen ist, so daß eine Bestimmung der Position über eine Relativbewegung zwischen Sensor und Encoder erfolgen kann, die länger als die Länge ($\lambda$) eines Polpaares des Encoders ist.

6. Anordnung nach Anspruch 1,
**dadurch gekennzeichnet,**
**daß** die Anordnung zur Berechnung eines Wertes einer Position oder eines Winkels mittels einer ARCTAN-Berechnung eine lineare Kennlinie erzeugt, aus der der Wert bestimmt wird, wobei die ARCTAN-Berechnung nach folgenden Gleichungen erfolgt:

$$\text{DIFF} := V1 - V2 = 2*V0*\cos(\tfrac{phi}{2})*\sin(?t) \tag{1}$$

$$\text{SUM} := V1 + V2 = 2*V0*\sin(\tfrac{phi}{2})*\sin(?t\text{-}90°) \tag{2}$$

$$\tan(\alpha) = \frac{DIFF}{SUM} = \frac{2 * V0 * \cos(\frac{phi}{2}) * \sin(?\, t)}{2 * V0 * \sin(\frac{phi}{2}) * \sin(?\, t - 90°)}$$

$$= \frac{\cos(\frac{phi}{2}) * \sin(?\, t)}{\sin(\frac{phi}{2}) * -\cos(?\, t)} = \frac{-\tan(?\, t)}{\tan(\frac{phi}{2})} \quad mit \quad \tan(\frac{phi}{2}) = \text{const.} = c \qquad [3]$$

$$\alpha = \arctan\left(\frac{-\tan(?\, t)}{c}\right) \quad mit \quad c = \tan(\frac{phi}{2}) \qquad\qquad\qquad [4]$$

wobei sind:

$\alpha$: der berechnete Winkel,
V0: die maximale Amplitude der Signale V1 und V2,
V1: das Ausgangssignal der ersten Halbbrücke,
V2: das Ausgangssignal der zweiten Halbbrücke
phi: der Phasenversatz zwischen den Signalen V1 und V2 und
$\omega$t: die Kreisgeschwindigkeit der Signale V1 und V2.

FIG. 1

FIG. 2

EP 1 243 899 A1

FIG. 3

FIG. 4

**Europäisches Patentamt**

**EUROPÄISCHER RECHERCHENBERICHT**

Nummer der Anmeldung

EP 02 10 0281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 2000, no. 14, 5. März 2001 (2001-03-05) & JP 2000 304570 A (SONY CORP), 2. November 2000 (2000-11-02) * Zusammenfassung * | 1,3,6 | G01D5/244 G01D5/245 G01D5/16 |
| Y | -& US 6 340 908 B1 (MATUYAMA YASHUIKO) 22. Januar 2002 (2002-01-22) * Spalte 5, Zeile 52 - Spalte 8, Zeile 33; Abbildungen 2-5 * | 2,4 | |
| P,X | EP 1 089 056 A (PHILIPS CORP INTELLECTUAL PTY ;KONINKL PHILIPS ELECTRONICS NV (NL)) 4. April 2001 (2001-04-04) * das ganze Dokument * | 1 | |
| A | | 3,4 | |
| Y | US 4 629 982 A (KIESLICH WALTER G) 16. Dezember 1986 (1986-12-16) * Spalte 5, Zeile 19 - Spalte 10, Zeile 29; Abbildungen 4,5A-5G * | 2,4 | RECHERCHIERTE SACHGEBIETE (Int.Cl.7) G01D |
| A | DE 30 00 914 A (POLYGRAM GMBH) 16. Juli 1981 (1981-07-16) * das ganze Dokument * | 1 | |

Der vorliegende Recherchenbericht wurde für alle Patentansprüche erstellt

| Recherchenort | Abschlußdatum der Recherche | Prüfer |
|---|---|---|
| DEN HAAG | 2. Juli 2002 | Chapple, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 1 243 899 A1**

ANHANG ZUM EUROPÄISCHEN RECHERCHENBERICHT
ÜBER DIE EUROPÄISCHE PATENTANMELDUNG NR.

EP 02 10 0281

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| JP | 2000304570 | A | 02-11-2000 | US | 6340908 | B1 | 22-01-2002 |
| EP | 1089056 | A | 04-04-2001 | DE | 19947179 | A1 | 05-04-2001 |
| | | | | EP | 1089056 | A1 | 04-04-2001 |
| | | | | JP | 2001159543 | A | 12-06-2001 |
| US | 4629982 | A | 16-12-1986 | KEINE | | | |
| DE | 3000914 | A | 16-07-1981 | DE | 3000914 | A1 | 16-07-1981 |

Für nähere Einzelheiten zu diesem Anhang : siehe Amtsblatt des Europäischen Patentamts, Nr.12/82